# EUROPÄISCHE PATENTANMELDUNG

(11) **EP 4 711 609 A1**
(43) Veröffentlichungstag der Anmeldung: **18.03.2026**
(21) Anmeldenummer: 25201529.2
(22) Anmeldetag: 11.09.2025
(51) Int. Cl.: F03D 80/50

(54) **VORRICHTUNG ZUR INSPEKTION, WARTUNG UND/ODER REPARATUR VON ROTORBLÄTTERN EINER WINDENERGIEANLAGE UND DEREN VERWENDUNG**

(30) Priorität: 16.09.2024 DE 202024105326 U; 16.09.2024 DE 102024126653
(71) Anmelder: WP Systems GmbH, 01945 Ruhland (DE)
(72) Erfinder: Boock, Matthias, 01945 Ruhland (DE); Boesner, Jan, 01945 Ruhland (DE); Billeb, Michael, 01945 Ruhland (DE); Hoog, Arne, 01945 Ruhland (DE); Müller, Torsten, 01945 Ruhland (DE); Hörold, Sebastian, 01945 Ruhland (DE); Kretzschmar, Nicolas, 01945 Ruhland (DE)
(74) Vertreter: Kailuweit & Uhlemann Patentanwälte Partnerschaft mbB

(57) **Zusammenfassung**

Die Erfindung betrifft eine Vorrichtung zur Inspektion, Wartung und/oder Reparatur von Rotorblättern einer Windenergieanlage, sowie deren, wobei die Windenergieanlage mindestens einen Turm umfasst, aufweisend mindestens die folgenden Komponenten:
• einen Abdruckrahmen, aufweisend mindestens zwei aus Segmenten bestehende Längsträger und einen Querträger;
• mindestens ein Fahrwerk, aufweisend mehrere Führungseinrichtungen und angeordnet am Querträger;
• eine wettergeschützte Kammer, mindestens aufweisend mehrere mittels Gelenken miteinander verbundene Kammerelemente;
• eine Stützstruktur, welche die wettergeschützte Kammer mit den Längsträgern verbindet und mindestens erste Führungselemente zur Führung der Längsträger und zweite Führungselemente zur Führung der Kammerelemente aufweist;
• ein Aufhängungssystem, aufweisend mindestens zwei Aufhängungsarme, die mittels Gelenken mit der Stützstruktur verbunden sind und mindestens drei Aufhängungsvorrichtungen, wobei mindestens zwei Aufhängungsvorrichtungen an den Aufhängungsarmen und eine Aufhängungsvorrichtung am Querträger angeordnet sind.

## Beschreibung

Die Erfindung betrifft eine Vorrichtung zur Inspektion, Wartung und/oder Reparatur von Rotorblättern einer Windenergieanlage und deren Verwendung.

EP 4 251 827 A1 offenbart eine Vorrichtung, die den Zugang zu einem Rotorblatt einer Windkraftanlage ermöglicht. Die Vorrichtung weist eine Plattform mit mehreren Unterplattformen, die beweglich miteinander verbunden sind; eine Trägeranordnung, eine Hebevorrichtung und Führungselemente auf. Nachteilig bei einer derartigen Vorrichtung ist, dass eine derartige Vorrichtung eine erhöhte Masse aufweist.

Aus EP 4 151 857 B1 ist eine gewichtsreduzierte Vorrichtung zur Inspektion, Reparatur und/oder Beschichtung von Rotorblättern bekannt, die mindestens eine wettergeschützte Kapsel, einen segmentierten Abdruckträger, einen Querträger, ein Fahrwerk sowie ein Aufhängungssystem mit mindestens zwei Aufhängungspunkten umfasst. Nachteil einer derartigen Vorrichtung ist, dass der allseitige Zugang des Rotorblattes nur durch eine Neupositionierung der Kapsel möglich ist und die Vorrichtung eine verringerte Kippstabilität aufweist.

DE 20 2007 002 930 U1 ist eine Hebebühne für Befahranlagen zur Wartung von Rotorblättern bekannt mit mehreren Bühnenelementen, die um eine Öffnung herum angeordnet sind. Dabei sind die Bühnenelemente mittels eines Schwenkgelenkes miteinander verbunden und ermöglichen ein scherenartiges Öffnen oder Schließen der Bühnenelemente. Nachteilig bei dieser Vorrichtung ist, dass eine derartige Hebebühne keinen Abdruckrahmen zur Positionierung der Hebebühne am Turm aufweist und die Gefahr von Kollisionen der Hebebühne mit den Blattkanten gegeben ist.

DE 10 2018 120 579 A1 offenbart eine Rotorblattbefahranlage mit einer Wartungskammer, welche an einem Rahmenelement, das über ein Fahrwerk an der Wandung eines Turms einer Windenergieanlage abgestützt wird, angeordnet ist. Mittels Tragseilen, die über Seilwinden mit dem Rahmenelement verbunden sind, ist die Wartungskammer vertikal bewegbar.

DE 20 217 105 483 U1 beschreibt eine Rotorblattbefahranlage mit einer Wartungskammer, wobei die Wartungskammer über einen Tragrahmen mit einem Abdruckrahmen verbunden ist. Der Abdruckrahmen ist aus einem Querträger und zwei zueinander beabstandeten, verlängerbaren Längsträgern gebildet.

DE 10 2021 124 117 B3 offenbart eine Rotorblattbefahranlage mit einem aus Segmenten ausgebildeten Abdruckträger und einer an dem Abdruckträger drehbar aufgehängten wettergeschützten Wartungskammer.

WO 2022 /112121 A1 beschreibt eine Rotorblattbefahranlage mit zwei zueinander beabstandeten Längsträgern und einer Plattform, wobei die Plattform vier miteinander verbundene Unterplattformen aufweist. Die Längsträger sind jeweils mit einer Unterplattform mittels eines Drehgelenks und mit einer weiteren Unterplattform mittels einer verschiebbarer Verbindung verbunden.

Aufgabe ist es daher, eine Vorrichtung zur Inspektion, Wartung und/oder Reparatur von Rotorblättern einer Windenergieanlage bereitzustellen, welche die Nachteile des Standes der Technik überwindet.

Erfindungsgemäß wird die Aufgabe durch eine Vorrichtung gemäß dem unabhängigen Anspruch 1 gelöst. Vorteilhafte Ausgestaltungen der Erfindung sind in den abhängigen Ansprüchen angegeben.

Ein erster Aspekt der Erfindung betrifft eine Vorrichtung zur Inspektion, Wartung und/oder Reparatur von Rotorblättern einer Windenergieanlage, wobei die Windenergieanlage (WEA) mindestens einen Turm umfasst, aufweisend mindestens die folgenden Komponenten:
- einen Abdruckrahmen, aufweisend mindestens zwei aus Segmenten bestehende Längsträger und einen Querträger;
- mindestens ein Fahrwerk, aufweisend mehrere Führungseinrichtungen und angeordnet am Querträger;
- eine wettergeschützte Kammer, mindestens aufweisend mehrere mittels Gelenken miteinander verbundene Kammerelemente;
- eine Stützstruktur, welche die wettergeschützte Kammer mit den Längsträgern verbindet und mindestens erste Führungselemente zur Führung der Längsträger und zweite Führungselemente zur Führung der Kammerelemente aufweist;
- ein Aufhängungssystem, aufweisend mindestens zwei Aufhängungsarme, die mittels Gelenken mit der Stützstruktur verbunden sind und mindestens drei Aufhängungsvorrichtungen, wobei mindestens zwei Aufhängungsvorrichtungen an den Aufhängungsarmen und eine Aufhängungsvorrichtung am Querträger angeordnet sind.

Vorteilhaft ist eine derartige Vorrichtung für den Transport zur Windenergieanlage platzsparend ausgebildet. Weiterhin vorteilhaft ist die Vorrichtung turmgeführt ausgebildet, und ermöglicht den allseitigen Zugang zu einem Rotorblatt ohne Positionswechsel der Vorrichtung.

Der Turm der WEA legt dabei eine Orientierung der Vorrichtung bzw. ihrer Bestandteile im bestimmungsgenmäßen Gebrauch der Vorrichtung fest. Im Folgenden werden die Begriffe "turmzugewandt" und "turmabgewandt" entlang der Ausdehnung der Längsträger verwendet. Die Ausdehnung der Längsträger meint deren Längsachse und entspricht der Richtung der größten Ausdehnung der Längsträger. "Turmzugewandt" meint jeweils zum Turm der WEA hin weisend, wohingegen "turmabgewandt" vom Turm der WEA weg weisend meint. Dabei liegen sich zweckmäßig turmzugewandt und turmabgewandt gegenüber.

Auch das Rotorblatt legt eine Orientierung der Vorrichtung bzw. ihrer Bestandteile im bestimmungsgemäßen Gebrauch der Vorrichtung fest. Im Folgenden werden die Begriffe "blattzugewandt" und "blattabgewandt" verwendet. Dabei meint "blattzugewandt" zum Rotorblatt hin weisend und "blattabgewandt" vom Rotorblatt weg weisend. Dabei liegen sich zweckmäßig blattzugewandt und blattabgewandt gegenüber.

Der Boden, gemeint ist im Sinne der Erfindung der Aufstellungsort der WEA, dient ebenfalls zur Festlegung der Orientierung der Vorrichtung bzw. ihrer Bestandteile im bestimmungsgemäßen Gebrauch der Vorrichtung. Im Folgenden werden die Begriffe "bodenzugewandt" und "bodenabgewandt" verwendet. Dabei meint "bodenzugewandt" zum Boden hin weisend und "bodenabgewandt" vom Boden weg weisend. Dabei liegen sich zweckmäßig bodenzugewandt und bodenabgewandt gegenüber.

Im Sinne der Erfindung stellt der Abdruckrahmen den Abstand der Kammer zum Turm ein. Der Abdruckrahmen weist erfindungsgemäß mindestens zwei aus Segmenten bestehende Längsträger und einen Querträger auf. Dabei ermöglichen die aus Segmenten ausgebildeten Längsträger vorteilhaft die Einstellung des Abstandes der Kammer vom Turm der Windkraftanlage durch die Einstellbarkeit der Länge der Längsträger. Dabei ist die Länge der Längsträger im Betrieb der Vorrichtung nahezu senkrecht zur Längsachse des Turms der WEA ausgerichtet, wobei die Längsachse des Turms entlang der Höhe der WEA ausgerichtet ist. Dies ist insbesondere dann relevant, wenn die Kammer entlang des Rotorblattes von der Blattspitze zur Blattwurzel oder von der Blattwurzel zur Blattspitze bewegt wird.

Der Querträger verbindet vorteilhaft die beiden Längsträger miteinander, in Ausführungsformen verbindet der Querträger die Längsträger an ihren jeweils turmzugewandten Enden, in Turmnähe, miteinander.

Im Sinne der Erfindung dient das Fahrwerk der Bewegung der Vorrichtung am Turm der Windkraftanlage und bezeichnet die Gesamtheit aller Teile der erfindungsgemäßen Vorrichtung, die eine Verbindung der gesamten Vorrichtung mit ihrem Fahrweg herstellen. Der Fahrweg ist dabei im Sinne der Erfindung die Außenwand des Turms einer WEA. Erfindungsgemäß ist das Fahrwerk am Querträger angeordnet und umfasst mehrere Führungseinrichtungen. Vorteilhaft ist das Fahrwerk dadurch an unterschiedliche Turmdurchmesser anpassbar. In Ausführungsformen weisen die Führungseinrichtungen äußere und innere Führungseinrichtungen auf, wobei die äußeren Führungseinrichtungen am Querträger zum Längsträger hin und die inneren Führungseinrichtungen am Querträger vom Längsträger weg angeordnet sind. Dadurch wird vorteilhaft erreicht, dass die äußeren Führungseinrichtungen mit dem Turm der WEA in Kontakt sind, um maximale seitliche Sicherheit gegen Umkippen bei Seitenwind zu garantieren und eine Führungs- und Tragfunktion zu übernehmen, wenn die Form der Kammer das Rotorblatt noch nicht in ihrer Öffnung aufgenommen hat und das Rotorblatt zumindest teilweise umschließt. Weiterhin vorteilhaft kommen beim weiteren Hochfahren der Vorrichtung am Turm der WEA in Bereichen mit verringerten Turmdurchmesser die inneren Führungseinrichtungen mit dem Turm der WEA in Kontakt und übernehmen die Stützung und Tragfunktion. Die äußeren Führungseinrichtungen verlieren dann den Kontakt zum Turm der WEA. Vorteilhaft können Kräfte über die inneren Führungseinrichtungen besser in die Vorrichtung abgeleitet werden, wodurch die Masse der Vorrichtung reduziert werden kann. In weiteren Ausführungsformen weist das Fahrwerk zwei äußere und zwei innere Führungseinrichtungen auf. Unter Führungseinrichtungen werden im Sinne der Erfindung Einrichtungen verstanden, welche ermöglichen, dass die Vorrichtung entlang eines Fahrwegs verschoben werden kann. Ohne darauf beschränkt zu sein, seien hier Räder, Rollen und Schienen sowie Kettenraupen oder Kombinationen daraus beispielhaft genannt. In Ausführungsformen umfasst das Fahrwerk vier Führungseinrichtungen, bevorzugt Rollen und/oder Räder. Die Rollen und/oder Räder sind in Ausführungsformen direkt oder indirekt mit dem Querträger verbunden. In weiteren Ausführungsformen sind die Führungseinrichtungen indirekt mit dem Querträger verbunden, bspw. über Aufnahmen und/oder Halterungselemente.

Die wettergeschützte Kammer dient im Sinne der Erfindung der Aufnahme von Personen, die Inspektions-, Wartungs- und/oder Reparaturarbeiten an Rotorblättern einer WEA ausführen. Die Kammer ist wettergeschützt und ermöglicht witterungsunabhängig die auszuführenden Arbeiten. Erfindungsgemäß weist die Kammer mindestens mehrere mittels Gelenken miteinander verbundene Kammerelemente auf. Dadurch wird vorteilhaft die allseitige Zugänglichkeit des Rotorblatts von der Kammer aus gewährleistet und die Anpassung der Form der Kammer an verschiedene Rotorblattquerschnitte ermöglicht. Dazu sind die Kammerelemente derart miteinander verbunden, dass sie eine das Rotorblatt umschließende Form mit einer Öffnung zur Aufnahme des Rotorblatts bilden und Formänderungen ermöglichen.

In Ausführungsformen weist die Kammer eine Beleuchtung auf. Dadurch wird vorteilhaft die Ausführung der Inspektions-, Wartungs- und/oder Reparaturarbeiten an Rotorblättern einer WEA rund um die Uhr ermöglicht.

In weiteren Ausführungsformen weist die Kammer weiterhin einen Schubboden und/oder einen Zwischenboden auf. Vorteilhaft verbessert der Schubboden und/oder der Zwischenboden die Zugänglichkeit der turmzugewandten Seite des Rotorblatts von der Kammer aus und ermöglicht einen allseitigen, 360° Zugang zum Rotorblatt.

Die Stützstruktur verbindet erfindungsgemäß die wettergeschützte Kammer mit den Längsträgern und weist mindestens erste Führungselemente zur Führung der Längsträger und zweite Führungselemente zur Führung der Kammerelemente auf. Dabei ist jeweils ein erstes Führungselement zur Führung eines Längsträgers vorgesehen. Vorteilhaft ermöglicht die Stützstruktur die Bewegung der Kammer entlang der Längsachse der Längsträger und damit die Einstellung des Abstands der Kammer zum Turm. Weiterhin ermöglichen die zweiten Führungselemente eine Bewegung der Kammerelemente quer zu Ausdehnung der Längsträger und damit die Einstellung der Form der Kammer.

Vorteilhaft ermöglichen die ersten Führungselemente, dass die Kammer entlang der Längsträger bewegt werden kann und damit der Abstand der Kammer zum Turm der WEA eingestellt werden kann. In Ausführungsformen sind die ersten Führungselementen quaderartig ausgebildet und umgeben den Längsträger bereichsweise. In weiteren Ausführungsformen sind die ersten Führungselemente gitterartig ausgebildet. In Ausführungsformen sind die quaderartig ausgebildeten ersten Führungselemente derart angeordnet, dass die längeren Kanten des Quaders entlang der Ausdehnung der Längsträger ausgerichtet sind. In Ausführungsformen umfassen die ersten Führungselemente eine Rollenführung, aufweisend mehrere Rollen. In weiteren Ausführungsformen sind die Rollen an den längeren Kanten der quaderartig ausgebildeten ersten Führungselemente innen x-förmig angeordnet. Zweckmäßig sind die Rollen an beiden Enden der längeren Kanten angeordnet, so dass die ersten Führungselemente jeweils acht Rollen umfassen. Vorteilhaft sind damit weniger Rollen als im Stand der Technik üblich zur Führung nötig.

Weiterhin vorteilhaft ermöglichen die zweiten Führungselemente eine Bewegung der Kammerelemente, bevorzugt der ersten Kammerelemente, in einer Richtung senkrecht zur Ausdehnung der Längsträger. Damit sind die Kammerelemente quer zur Ausdehnung der Längsträger bewegbar und die Form der Kammer an verschiedene Rotorblattquerschnitte einstellbar. In Ausführungsformen sind die zweiten Führungselemente als Schienen ausgebildet und zweckmäßig in einer Richtung quer zur Ausdehnung der Längsträger an der Stützstruktur angeordnet. Damit wird vorteilhaft die Querbewegung der Kammerelemente ermöglicht. In weiteren Ausführungsformen sind die zweiten Führungselemente an der turmabgewandten Seite der Stützstruktur angeordnet. In Ausführungsformen weist die Stützstruktur zweite Führungselemente zur Führung der ersten Kammerelemente auf. Es ist vorteilhaft, wenn die zweiten Führungselemente die Kammerelemente, bevorzugt die ersten Kammerelemente, beidseitig führen. Beidseitig meint hierbei, dass die zweiten Führungselemente an beiden Seiten der Stützstruktur, der bodenzugewandten und der bodenabgewandten Seite, angeordnet sind.

Erfindungsgemäß weist die Vorrichtung ein Aufhängungssystem auf, welches mindestens zwei Aufhängungsarme, die mittels Gelenken mit der Stützstruktur verbunden sind und mindestens drei Aufhängungsvorrichtungen aufweist, wobei mindestens zwei Aufhängungsvorrichtungen an den Aufhängungsarmen und eine Aufhängungsvorrichtung am Querträger angeordnet sind. In Ausführungsformen sind die mindestens zwei Aufhängungsarme an der turmzugewandten Seite der Stützstruktur angeordnet. In Ausführungsformen sind die Aufhängungsarme L-förmig ausgebildet. Zweckmäßig wird die L-förmige Ausbildung durch eine mehrteilige, bevorzugt zweiteilige, Ausbildung der Aufhängungsarme erreicht, wobei die Teile starr, bspw. mittels Schweißen oder beweglich, bspw. mittels Gelenken, bevorzugt starr und unlösbar mittels Schweißen, miteinander verbunden sind. Erfindungsgemäß sind die Aufhängungsarme jeweils mittels eines Gelenkes, bevorzugt eines Drehgelenkes, mit der Stützstruktur verbunden. Zweckmäßig verbindet das Gelenk jeweils ein unteres Ende des Aufhängungsarms mit der Stützstruktur und ermöglicht eine Bewegung des Aufhängungsarms um eine Drehachse, die parallel zur Ausdehnung der Längsträger ausgerichtet ist. Vorteilhaft kann dadurch eine Verringerung des Schrägseilwinkels im Einsatz der Vorrichtung, insbesondere wenn die Vorrichtung nahe der Blattwurzel eingesetzt wird, und damit eine Verringerung der durch den Schrägseilwinkel auftretenden Biegebelastungen der Vorrichtung erreicht werden. Weiterhin vorteilhaft kann durch die Verringerung des Schrägseilwinkels die mittels der Vorrichtung befahrbare Höhe des Rotorblatts zur Blattwurzel hin erhöht und damit der einer Wartung, Inspektion und/oder Reparatur zugängliche Teil eines Rotorblatts erweitert werden. Aufhängungsvorrichtungen im Sinne der Erfindung umfassen Rollen und/oder Winden. Erfindungsgemäß sind zwei Aufhängungsvorrichtungen an den Aufhängungsarmen angeordnet. Dabei ist zweckmäßig jeweils eine Aufhängungsvorrichtung an einem Aufhängungsarm angeordnet, zweckmäßig an jeweils einem Teil des Aufhängungsarms, der bei L-förmig ausgebildeten Aufhängungsarmen in einer Ebene parallel zur Längsachse des Turms der WEA ausgerichtet ist. In weiteren Ausführungsformen sind die Aufhängungsvorrichtungen jeweils turmzugewandt an den Aufhängungsarmen angeordnet. Weiterhin erfindungsgemäß ist eine Aufhängungsvorrichtung am Querträger, bevorzugt mittig am Querträger angeordnet. In weiteren Ausführungsformen weist das Aufhängungssystem weitere Aufhängungsvorrichtungen auf. Diese weiteren Aufhängungsvorrichtungen können an den Teilen der Aufhängungsarme angeordnet sein, die bei L-förmig ausgebildeten Aufhängungsarmen in einer Ebene parallel zu den Längsträgern ausgerichtet sind. In weiteren Ausführungsformen können die weiteren Aufhängungsvorrichtungen verschiebbar entlang des Teils des Aufhängungsarms, an dem sie angeordnet sind, ausgebildet sein.

In bevorzugten Ausführungsformen sind die Längsträger aus jeweils mindestens zwei Segmenten bestehende Teleskopträger. Zweckmäßig weisen die Längsträger dazu jeweils ein äußeres und mindestens ein inneres Segment auf, die einander angeordnet sind und geführt relativ zueinander verschoben werden können. Zweckmäßig wird dazu das äußere Segment über einen Riementrieb, Zahnstangentrieb oder Spindeltrieb und die inneren Segmente über Kunststoffseile angetrieben. In Ausführungsformen sind die Segmente jeweils als Hohlprofile mit einem vieleckigen Querschnitt ausgebildet.

In Ausführungsformen sind die Segmente des Längsträgers jeweils als Hohlprofile mit einem rechteckigen Querschnitt ausgebildet. Dabei kann es vorteilhaft sein, dass die Eckbereiche des rechteckigen Querschnitts jeweils eine verstärkte Wandstärke bzw. Dicke aufweisen. Dies ist insbesondere vorteilhaft, um im Bereich von Funktionsflächen (z.B. für die Führung, Anbringung von Bauteilen oder den Lauf von Rollen) verbesserte Trageigenschaften der Struktur zu realisieren. Ferner reduziert dies vorteilhaft auch die Beulneigung im Bereich des Querschnitts mit dünneren Wandstärken, welches ein maßgebliches Versagenskriterium bei derart dünnwandigen Querschnitten darstellt. In Ausführungsformen weist der Querschnitt eine Wandstärke im Bereich von 3 mm bis 5 mm und eine verstärkte Wandstärke in den Eckbereichen im Bereich von 5 mm bis 8 mm auf. In weiteren Ausführungsformen weisen die Segmente der Längsträger jeweils einen viereckigen Querschnitt mit jeweils im 45° Winkel abgeschrägten Ecken auf. Dies ermöglicht vorteilhaft ein Entlanggleiten der Rollenführung der ersten Führungselemente und somit die Bewegung der Kammer entlang der Ausdehnung der Längsträger. Dadurch wird weiterhin vorteilhaft die Anzahl der Führungselemente, umfassend mehrere Rollen gegenüber dem Stand der Technik reduziert, bevorzugt um die Hälfte.

In weiteren Ausführungsformen ist der Querschnitt der Segmente der Längsträger aus vier Seitenblechen und vier Eckprofilblechen gebildet, die miteinander verschweißt sind. Dadurch ist es vorteilhaft möglich, Segmente mit unterschiedlichen Querschnittsabmessungen und Wanddicken auszubilden und eine einfache Anpassung an variierende Lasten/Belastungen zu gewährleisten.

In Ausführungsformen weisen die vier Eckprofilbleche und die vier Seitenbleche eine Längsausdehnung auf, die der Längsausdehnung eines Segmentes des Längsträgers entspricht. Zweckmäßig sind die Eckprofilbleche als zweifach abgewinkelte Profilbleche ausgebildet, wobei die Abwinklungen jeweils 45° betragen. Weiterhin zweckmäßig weisen die Eckprofilbleche beidseitig einen Absatz zur Anbindung der Seitenbleche mittels Schweißen auf. Beidseitig meint hierbei jeweils entlang der Ausdehnung des Eckprofilblechs entlang des Umfangs des Segmentes. Zweckmäßig werden die Seitenbleche auf den Absätzen zweier Eckprofilbleche angeordnet und mit diesen mittels Schweißen verbunden, so dass ein Segment des Längsträgers mit einem vieleckigen Querschnitt gebildet wird. Dabei ist es vorteilhaft, wenn die Überdeckung von Seitenblech und Eckprofilblech jeweils im Bereich von 10 mm bis 30 mm entlang des Umfangs des Segmentes liegt, um ein stabiles und belastbares Segment eines Längsträgers zu bilden.

In weiteren Ausführungsformen kann mindestens eines der Seitenbleche eines Segmentes des Längsträgers eine Vielzahl von Durchbrechungen aufweisen, so dass eine Art "Lochmuster" gebildet wird. Dies dient vorteilhaft der Gewichtseinsparung.

In Ausführungsformen weisen die Seitenbleche eine Dicke im Bereich von 3 mm bis 5 mm und eine Breite im Bereich von 50 mm bis 350 mm auf, wobei die Breite der Seitenbleche senkrecht zur Längsausdehnung der Seitenbleche verläuft.

In bevorzugten Ausführungsformen umfassen die Kammerelemente mindestens zwei erste quer zur Ausdehnung der Längsträger verschiebbare Kammerelemente, und jeweils zwei zweite und dritte Kammerelemente, wobei die zweiten und dritten Kammerelemente zueinander klappbar sind. Vorteilhaft ist dadurch die Anpassung der Form der Kammer an verschiedene Querschnitte des Rotorblatts, zum Einfangen eines Rotorblatts und zum Transport der Vorrichtung möglich. Weiterhin vorteilhaft ist damit die Verschiebung der ersten Kammerelemente und die Klappbarkeit der zweiten und dritten Kammerelemente unabhängig voneinander möglich, um eine größtmögliche Flexibilität der Form der Kammer zu ermöglichen. Zweckmäßig sind die beiden ersten Kammerelemente unabhängig voneinander verschiebbar ausgebildet. D.h. es kann nur eines des beiden ersten Kammerelemente oder auch beide erste Kammerelemente quer zur Ausdehnung der Längsträger verschoben werden.

In Ausführungsformen bilden jeweils ein erstes, ein zweites und ein drittes Kammerelement eine Kammerhälfte der Kammer.

Die ersten Kammerelemente sind dabei die Kammerelemente, die auf der turmzugewandten Seite der Kammer angeordnet sind, während sich die zweiten Kammerelemente in Richtung vom Turm weg weisend jeweils an ein erstes Kammerelement anschließen und sich die dritten Kammerelemente jeweils an ein zweites Kammerelement anschließen und an der turmabgewandten Seite der Kammer angeordnet sind.

In Ausführungsformen ist an einem ersten Kammerelement der Schubboden angeordnet. Zweckmäßig ist der Schubboden an einer blattzugewandten Seite des ersten Kammerelements angeordnet. Vorteilhaft ermöglicht der Schubboden einen verbesserten Zugang zum Rotorblatt an der turmzugewandten Seite der Kammer. Zweckmäßig ist der Schubboden dazu ausziehbar.

In weiteren Ausführungsformen ist an einem ersten Kammerelement ein Zwischenboden angeordnet, insbesondere mit dem ersten Kammerelement verbunden. Zweckmäßig ist der Zwischenboden an der turmzugewandten Seite der ersten Kammerelemente angeordnet. Vorteilhaft ermöglicht der Zwischenboden eine Verbindung der beiden ersten Kammerelemente in einer Richtung quer zur Ausdehnung der Längsträger miteinander, insbesondere wenn diese quer zur Ausdehnung der Längsträger auf ihren maximalen Abstand zueinander verschoben sind. In weiteren Ausführungsformen ist der Zwischenboden einteilig oder mindestens zweiteilig ausgebildet. In weiteren Ausführungsformen ist der Zwischenboden teleskopartig ausgebildet. Dadurch ist der Zwischenboden vorteilhaft teleskopartig in einer Richtung quer zur Ausdehnung der Längsträger ausfahrbar. Vorteilhaft wird dadurch eine Verbindung der beiden ersten Kammerelemente miteinander und damit eine vollumfängliche 360° Zugänglichkeit des Rotorblattes ermöglicht.

In bevorzugten Ausführungsformen ist ein erstes Kammerelement mit einem zweiten Kammerelement beidseitig mittels Gelenken verbunden. Beidseitig meint im Sinne der Erfindung, dass das erste Kammerelement und das zweite Kammerelement auf der blattzugewandten und der blattabgewandten Seite der Kammerelemente mittels Gelenken miteinander verbunden sind. Vorteilhaft wird dadurch ermöglicht, dass bei einer Verschiebung der ersten Kammerelemente quer zur Ausdehnung der Längsträger die Form der Kammer angepasst werden kann. Weiterhin vorteilhaft wird dadurch ermöglicht, dass ein erstes und ein zweites Kammerelement dadurch gegeneinander verschiebbar sind und das Einfangen des Rotorblatts erleichtern.

In bevorzugten Ausführungsformen ist ein zweites Kammerelement mit einem dritten Kammerelement beidseitig verbunden, wobei das zweite und das dritte Kammerelement auf einer blattabgewandten Seite mittels mindestens einem Gelenk und auf einer blattzugewandten Seite mittels mindestens einer Verriegelungsvorrichtung lösbar oder mittels mindestens einem Gelenk verbunden sind. Vorteilhaft können sich durch die lösbare Verbindung die dritten Kammerelemente frei bewegen und erleichtern ein Einfangen des Rotorblatts.

In bevorzugten Ausführungsformen sind die beiden dritten Kammerelemente lösbar miteinander verbunden. Vorteilhaft ist dadurch eine Öffnung der Kammer auf der turmabgewandten Seite der Kammer und eine Trennung der beiden Kammerhälften möglich, um durch entsprechendes Ein- und Ausfahren der Längsträger ein Rotorblatt einzufangen und durch Schließen der turmabgewandten Seite der Kammer das Rotorblatt zu umschließen und eine 360° Zugänglichkeit des Rotorblatts zu gewährleisten. Damit ist es vorteilhaft möglich, ein Rotorblatt einzufangen, ohne die Höhe der Vorrichtung zu ändern.

In Ausführungsformen sind die beiden dritten Kammerelemente beidseitig lösbar miteinander verbunden, d.h. auf der blattabgewandten und auf der blattzugewandten Seite.

In weiteren Ausführungsformen sind die dritten Kammerelemente mittels Spannvorrichtungen, insbesondere Bügelspannvorrichtungen, lösbar miteinander verbunden.

In bevorzugten Ausführungsformen weist die Stützstruktur weiterhin einen Rahmen zur Verbindung der beiden ersten Kammerelemente miteinander und dritte Führungselemente zur Führung der Aufhängungsarme auf. Vorteilhaft wird dadurch eine das Rotorblatt umschließende Form der Kammer und eine 360°-Zugänglichkeit des Rotorblatts ermöglicht. Weiterhin vorteilhaft wird dadurch eine geführte Bewegung der gelenkig mit der Stützstruktur verbundenen Aufhängungsarme ermöglicht.

In Ausführungsformen ist der Rahmen der Stützstruktur derart ausgebildet, dass eine Verbindung der beiden ersten Führungselemente in einer Richtung senkrecht zur Ausdehnung der Längsträger und eine Verbindung der beiden ersten Kammerelemente zu einer das Rotorblatt umschließenden Kammer ermöglicht wird.

In weiteren Ausführungsformen ist der Rahmen gitterförmig aus Profilelementen ausgebildet.

In weiteren Ausführungsformen sind die Aufhängungsarme mittels Gelenken mit dem Rahmen der Stützstruktur verbunden, bevorzugt mit einer bodenzugewandten Seite des Rahmens.

In Ausführungsformen sind die dritten Führungselemente an einer turmzugewandten Seite des Rahmens der Stützstruktur angeordnet. In weiteren Ausführungsformen sind die dritten Führungselemente an einer bodenabgewandten Seite des Rahmens angeordnet.

In weiteren Ausführungsformen sind die zweiten Führungselemente am Rahmen der Stützstruktur, zweckmäßig an einer turmabgewandten Seite des Rahmens der Stützstruktur angeordnet.

In Ausführungsformen sind die dritten Führungselemente als Schienen ausgebildet. In weiteren Ausführungsformen sind die dritten Führungselement mehrteilig ausgebildet, dabei sind erste Schienen in einer Richtung quer zur Ausdehnung der Längsträger an der Stützstruktur und zweite Schienen in einer Richtung entlang der Längsrichtung der Aufhängungsarme an diesen angeordnet. Dadurch werden vorteilhaft die Aufhängungsarme beim Schwenken um die Drehachse des Drehgelenks geführt und zusätzlich zum Drehgelenk mit der Stützstruktur verbunden.

In bevorzugten Ausführungsformen sind der Rahmen der Stützstruktur und der Querträger des Abdruckrahmens klappbar ausgebildet. Vorteilhaft sind dadurch die Abmessungen der Vorrichtung für einen STVO-konformen Transport anpassbar.

In Ausführungsformen ist der Querträger um mindestens eine Achse, die parallel zur Ausdehnung der Längsträger ausgerichtet ist, klappbar ausgebildet. Zweckmäßig ist der Querträger dazu mehrteilig ausgebildet, wobei die Teile mittels Gelenken miteinander verbunden sind.

In weiteren Ausführungsformen ist der Rahmen der Stützstruktur um mindestens eine Achse, die senkrecht zur Ausdehnung der Längsträger bzw. parallel zur Längsachse des Turms der WEA ausgerichtet ist, klappbar ausgebildet. Zweckmäßig ist das Rahmen dazu mehrteilig ausgebildet, wobei die Teile mittels Gelenken miteinander verbunden sind.

In Ausführungsformen sind der Rahmen der Stützstruktur und der Querträger mehrfach klappbar ausgebildet. Vorteilhaft werden dadurch minimale Abmessungen der Vorrichtung für den STVO-konformen Transport der Vorrichtung erreicht.

In Ausführungsformen ist der Querträger mindestens zweifach, bevorzugt vierfach klappbar ausgebildet.

In weiteren Ausführungsformen ist der Rahmen mindestens zweifach, bevorzugt dreifach klappbar ausgebildet.

In bevorzugten Ausführungsformen sind der Querträger und die Längsträger durch Gelenke miteinander verbunden. Vorteilhaft wird dadurch ein Aus- und Einfahren der beiden Längsträger und damit die Einstellung der Ausdehnung der Längsträger entlang ihrer Längsachse unabhängig voneinander ermöglicht. Weiterhin vorteilhaft ist damit eine Schwenkbewegung der Kammer um den Turm der WEA herum zur Positionierung der Kammer in Relation zum Rotorblatt möglich und das Einfangen eines Rotorblatts wird erleichtert

In weiteren Ausführungsformen sind der Querträger und die beiden Längsträger mittels Drehgelenken miteinander verbunden. Dabei ist die Drehachse der Drehgelenke parallel der Längsachse des Turms der WEA bzw. senkrecht zur Ausdehnung der Längsträger ausgerichtet.

In bevorzugten Ausführungsformen weisen die Kammerelemente jeweils ein Bodenelement, ein Dachelement und zwei Seitenelemente auf, wobei Boden-, Dach- und Seitenelemente jeweils als aus Metallprofilen gebildete Rahmen ausgebildet sind. Vorteilhaft ermöglichen die derart ausgebildeten Boden-, Dach- und Seitenelemente die Ausbildung einer wettergeschützten Kammer.

In Ausführungsformen sind die Boden- und Dachelemente eines Kammerelements gleichartig ausgebildet.

Zweckmäßig ist an dem Bodenelement eines Kammerelements eine begehbare Bodenstruktur angeordnet. Vorteilhaft gewährleistet die Bodenstruktur die Tragfähigkeit und ermöglicht die Begehung der Kammerelemente durch Personen. In Ausführungsformen ist die begehbare Bodenstruktur blechartig ausgebildet.

Weiterhin zweckmäßig können an den Seitenelementen, bevorzugt an den blattabgewandten Seitenelementen, Seitenwände, bevorzugt ausgebildet als Plane, angeordnet sein, die einen Schutz vor Witterung ermöglichen. Zweckmäßig sind die Seitenwände öffen- und schließbar ausgebildet.

In Ausführungsformen ist das Boden- und/oder Dachelement der zweiten Kammerelemente jeweils als Viergelenk ausgebildet. Ein Viergelenk meint im Sinne der Erfindung einen aus vier Gliedern bzw. Metallprofilen gebildeten Rahmen, wobei die Glieder durch Gelenke an ihren Eckpunkten zu einem Viereck miteinander verbunden sind. Vorteilhaft ermöglicht eine derartige Ausbildung der Boden- und/oder Dachelemente der zweiten Kammerelemente und deren Verbindung mit den ersten und dritten Kammerelemente eine Anpassung der viereckigen Form der Boden- und/oder Dachelemente der zweiten Kammerelemente bei Verschiebung der ersten Kammerelemente quer zur Ausdehnung der Längsträger.

Zweckmäßig ist an dem Dachelement eines Kammerelements eine Dachstruktur angeordnet. In Ausführungsformen ist die Dachstruktur als Plane ausgebildet und ermöglicht vorteilhaft einen Witterungsschutz. In weiteren Ausführungsformen sind an der blattzugewandten Seite eines Dachelementes Dichtelemente, bevorzugt ausziehbare, flexible Dichtelemente, angeordnet. Vorteilhaft wird dadurch der Abstand zwischen der blattzugewandten Seite der Dachelemente und der Oberfläche des Rotorblatts überbrückt und eine Ablaufrinne für das am Rotorblatt heruntergelaufene Wasser zu schaffen und das Wasser über die Dachelemente bzw. Dachstruktur der Kammerelemente abzuleiten. In weiteren Ausführungsformen sind die Dichtelemente als Plane, Silikon und/oder Gummi ausgebildet. Dabei sind zweckmäßig die Dichtelemente, die an die Seitenflächen des Rotorblatts anschließen als Plane ausgebildet und Dichtelemente, die an die Vorder- und/oder Hinterkante des Rotorblatts anschließen als Silikon- und/oder Gummielement ausgebildet. Vorteilhaft können die Silikon- und/oder Gummielemente bei den stark gekrümmten Vorder- und/oder Hinterkante des Rotorblatts eine ausreichende Dichtigkeit gewährleisten. In weiteren Ausführungsformen können die Dichtelemente auch überlappend ausgebildet sein, um vorteilhaft eine nahezu 360° umlaufende Dichtigkeit um das Rotorblatt herum zu erzielen.

In weiteren Ausführungsformen weisen die Metallprofile zumindest bereichsweise elastische Überzüge auf. Damit ist vorteilhaft gewährleistet, dass in Bereichen, in denen ein Kontakt zwischen Kammerelement und Rotorblatt auftreten kann, keine Schädigungen der Oberfläche des Rotorblatts erfolgen. In Ausführungsformen können an den Metallprofilen Führungsvorrichtungen, insbesondere Rollen angeordnet sein. Die Führungsvorrichtungen kontaktieren vorteilhaft das Rotorblatt bei einer Bewegung der Vorrichtung bzw. der Kammer entlang des Rotorblatts, bspw. beim Auf- und Abbewegen der Kammer, und gewährleisten eine zusätzliche Führung der Vorrichtung bzw. Kammer und das Vermeiden von Schädigungen der Oberfläche des Rotorblatts. In Ausführungsformen sind die Führungsvorrichtungen an den Metallprofilen der Seitenelemente, insbesondere an den blattzugewandten Seiten der Seitenelemente angeordnet.

In Ausführungsformen sind der Zwischenboden und/oder der Schubboden unterhalb der Bodenelemente der ersten Kammerelemente angeordnet, um eine Verschiebbarkeit zu gewährleisten.

In bevorzugten Ausführungsformen weisen die Bodenelemente der zweiten Kammerelemente eine begehbare Bodenstruktur aus quer verlaufenden, überlappenden Blechen auf. Vorteilhaft ermöglicht eine derartige Bodenstruktur einen tragfähigen durchgängigen Boden auch bei Anpassungen der Form der Kammer und/oder Kammerelemente. Quer meint im Sinne der Erfindung eine Richtung verlaufend von der blattabgewandten zur blattzugewandten Seite des Bodenelements.

In Ausführungsformen weisen auch die Bodenelemente der ersten und dritten Kammerelemente zumindest teilweise eine begehbare Bodenstruktur aus quer verlaufenden, überlappenden Blechen auf. Damit wird vorteilhaft eine Anbindung der Bodenstruktur der zweiten Kammerelemente an die der ersten und dritten Kammerelemente erreicht.

Ein weiterer Aspekt der Erfindung betrifft die Verwendung der erfindungsgemäßen Vorrichtung zur Inspektion, Wartung und/oder Reparatur von Rotorblättern einer Windenergieanlage.

Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

### Ausführungsbeispiele

Nachfolgend soll die Erfindung anhand eines Ausführungsbeispiels eingehender erläutert werden. Das Ausführungsbeispiel bezieht sich auf eine Vorrichtung zur Inspektion, Wartung und/oder Reparatur von Rotorblättern einer Windenergieanlage und soll dabei die Erfindung beschreiben ohne diese zu beschränken.

Anhand von Zeichnungen wird die Erfindung näher erläutert. Dabei zeigen
- **Fig. 1**: eine Vorrichtung zur Inspektion, Wartung und/oder Reparatur von Rotorblättern einer Windenergieanlage,
- **Fig. 2**: die Vorrichtung aus Fig. 1 in der Seitenansicht,
- **Fig. 3**: eine Vorrichtung aus Fig. 1 und 2 in der Draufsicht und verschiedenen Stadien der Querverschiebung der Kammerelemente,
- **Fig. 4**: eine Ansicht der Vorrichtung vom Turm aus gesehen,
- **Fig. 5**: eine schematische Draufsicht der Boden- und/oder Dachelemente der Kammerelemente,
- **Fig. 6**: eine Vorrichtung im teilweise geklappten Zustand,
- **Fig. 7**: einen Querschnitt eines Segments eines Längsträgers,
- **Fig. 8**: einen weiteren Querschnitt eines Segments eines Längsträgers.

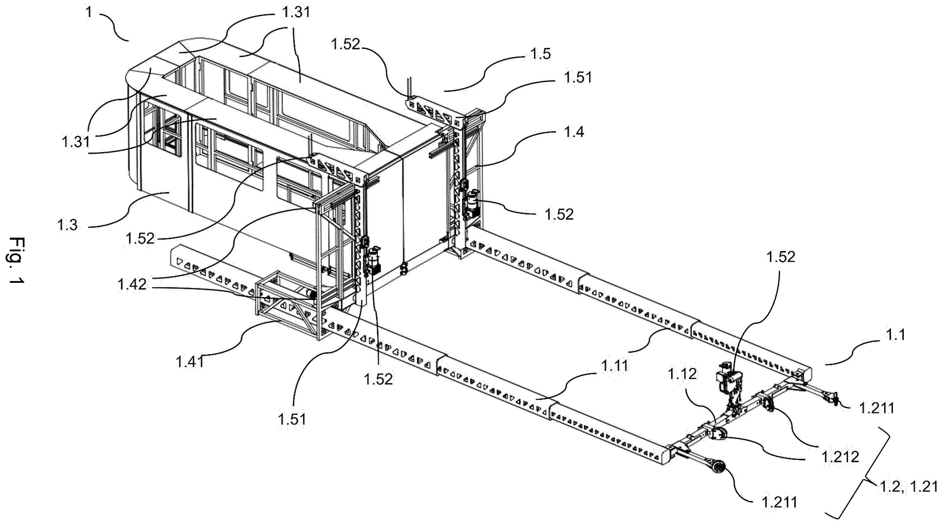

**Figur 1** zeigt eine Vorrichtung 1 zur Inspektion, Wartung und/oder Reparatur von Rotorblättern einer Windenergieanlage in einer perspektivischen Ansicht. Die Vorrichtung 1 weist mindestens einen Abdruckrahmen 1.1, aufweisend mindestens zwei aus Segmenten bestehende Längsträger 1.11 und einen Querträger 1.12 auf. Die Vorrichtung 1 weist weiterhin ein Fahrwerk 1.2, aufweisend mehrere Führungseinrichtungen 1.21, wie bspw. Rollen, auf. Die mehreren Führungseinrichtungen 1.21 weisen äußere 1.211 und innere 1.212 Führungseinrichtungen auf. Die äußeren Führungseinrichtungen 1.211 sind am Querträger zum Längsträger hin und die inneren Führungseinrichtungen 1.212 am Querträger vom Längsträger weg angeordnet. Weiterhin weist die Vorrichtung 1 eine wettergeschützte Kammer 1.3 auf, die mehrere mittels Gelenken miteinander verbundene Kammerelemente 1.31 aufweist. Die Vorrichtung 1 weist weiter eine Stützstruktur 1.4 auf, welche die Kammer 1.3 mit den Längsträgern 1.11 verbindet und mindestens erste Führungselemente 1.41 zur Führung der Längsträger 1.11 und zweite Führungselemente 1.42 zur Führung der Kammerelemente 1.31 aufweist. Weiterhin weist die Vorrichtung 1 ein Aufhängungssystems 1.5 auf, welches mindestens zwei Aufhängungsarme 1.51 und mindestens drei Aufhängungsvorrichtungen 1.52 aufweist. Zu erkennen ist, dass jeweils eine Aufhängungsvorrichtung 1.52 an einem Aufhängungsarm 1.51 und eine Aufhängungsvorrichtung 1.52 am Querträger 1.12 angeordnet ist. Die Aufhängungsarme 1.51 sind auf der turmzugewandten Seite der Stützstruktur angeordnet. In Ausführungsformen sind die Aufhängungsarme 1.51 L-förmig ausgebildet und sind zweckmäßig dazu zweiteilig ausgebildet. Die an den Aufhängungsarmen 1.51 angeordnete Aufhängungsvorrichtung 1.52 ist bei L-förmig ausgebildeten Aufhängungsarmen 1.51 an dem Teil des Aufhängungsarms 1.51, angeordnet, der in einer Ebene parallel zur Längsachse des Turms der WEA ausgerichtet ist.

Weiterhin kann das Aufhängungssystem 1.5 weitere Aufhängungsvorrichtungen 1.52 aufweisen. Diese weiteren Aufhängungsvorrichtungen 1.52 können an dem Teil der L-förmig ausgebildeten Aufhängungsarme 1.51 angeordnet sein, die in einer Ebene parallel zu den Längsträgern 1.11 ausgerichtet sind.

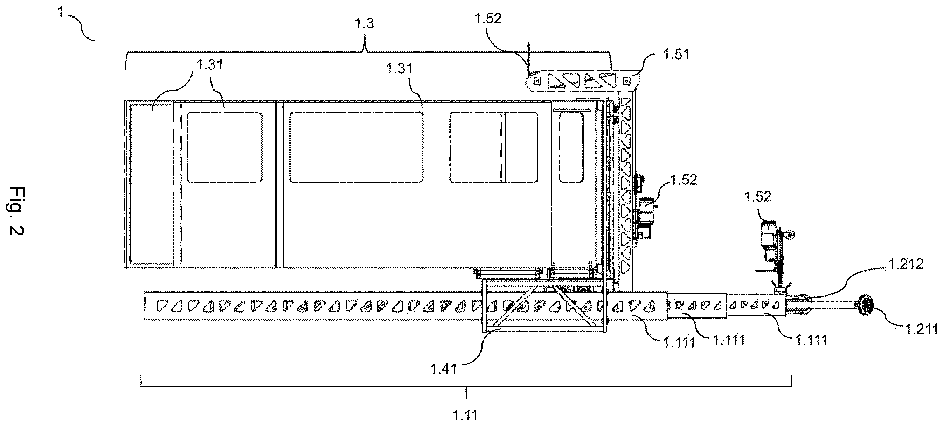

**Figur 2** zeigt ergänzend die Vorrichtung aus Fig. 1 in der Seitenansicht. Erkennbar sind die einzelnen Segmente 1.111 des Längsträgers 1.11.

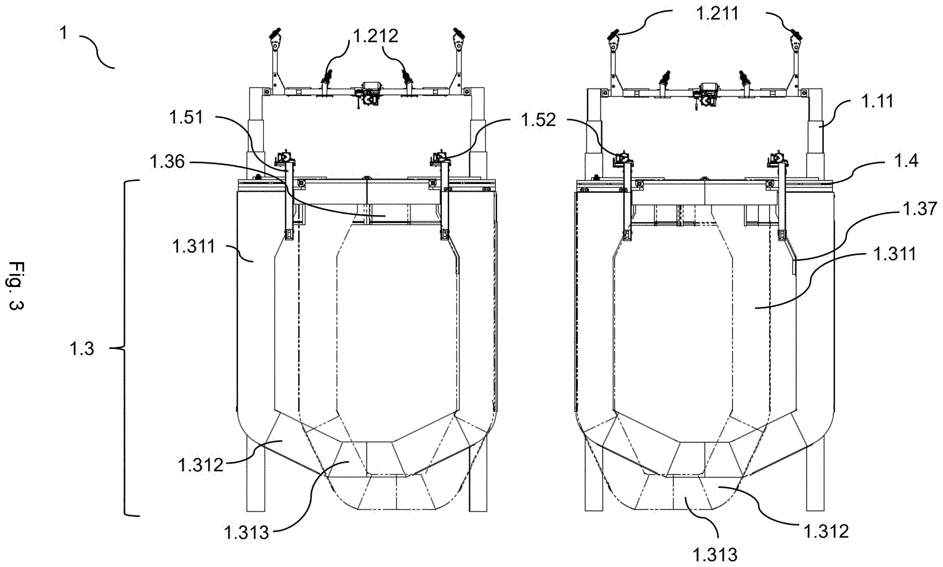

**Figur 3** zeigt eine Vorrichtung 1 in der Draufsicht in verschiedenen Stadien der Querverschiebung der Kammerelemente 1.31. Die Kammer 1.3 weist mindestens zwei erste Kammerelemente 1.311 und jeweils zwei zweite und dritte Kammerelemente 1.312, 1.313 auf. Fig. 3 links und rechts zeigen jeweils die Änderung der Form der Kammer 1.3 durch Verschiebung eines ersten Kammerelements 1.311 quer zur Ausdehnung der Längsträger 1.11, wobei die Kammerelemente 1.31 in der Ausgangsposition mit durchgezogenen Linien und in der Endposition mit gestrichelten Linien dargestellt sind. Diese Verschiebung wird durch die zweiten Führungselemente 1.42 (dargestellt in Fig. 1) gewährleistet. In Ausführungsformen sind auch beide erste Kammerelemente 1.311 quer zur Ausdehnung der Längsträger 1.11 verschiebbar. Ebenfalls erkennbar ist ein Zwischenboden 1.36, der an mindestens einem ersten Kammerelement 1.311 angeordnet ist. Weiterhin ist ein Schubboden 1.37 ersichtlich, der an einer blattzugewandten Seite der erstem Kammerelemente 1.311 angeordnet und ausziehbar ist.

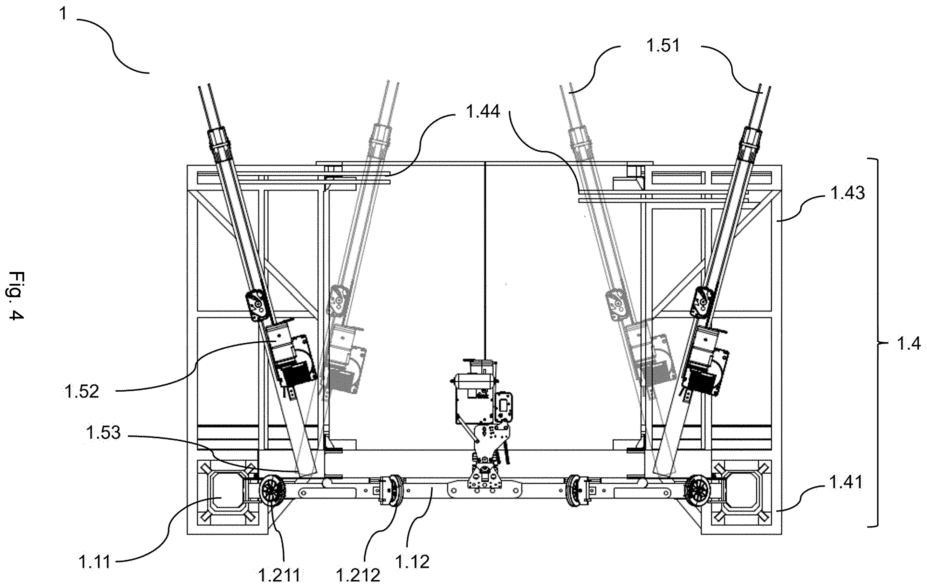

**Figur 4** zeigt eine Ansicht der Vorrichtung 1 vom Turm aus gesehen. Erkennbar ist die Stützstruktur 1.4, die weiterhin einen Rahmen 1.43 und dritte Führungselemente 1.44 aufweist. Ebenfalls sichtbar sind die Gelenke 1.53 mit denen die Aufhängungsarme 1.51 mit der Stützstruktur 1.4, zweckmäßig mit dem Rahmen 1.43 der Stützstruktur 1.4 verbunden sind. Die Aufhängungsarme 1.51 können eine Bewegung um eine Achse parallel zur Ausdehnung der Längsträger 1.11 ausführen und werden durch die dritten Führungselemente 1.44, die am Rahmen 1.43 angeordnet und mit diesem verbunden sind, geführt.

Die Kammerelemente 1.31 weisen jeweils ein Bodenelement 1.34, ein Dachelement 1.34 und zwei Seitenelemente auf, wobei Boden-, Dach- 1.34 und Seitenelemente jeweils als aus Metallprofilen gebildete Rahmen ausgebildet sind.

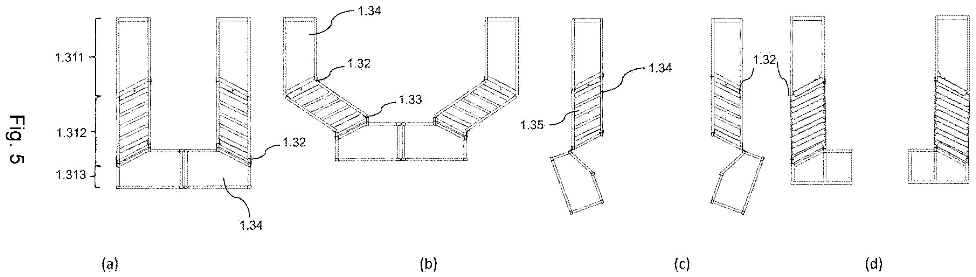

**Figur 5** zeigt eine schematische Draufsicht auf die Boden- und/oder Dachelemente 1.34 der Kammerelemente 1.311, 1.312 und 1.313. Erkennbar ist die Ausbildung als aus Metallprofilen gebildeter Rahmen. Weiterhin ersichtlich ist, dass die ersten Kammerelemente 1.311 beidseitig mittels Gelenken 1.32 jeweils mit einem zweiten Kammerelement 1.312 verbunden sind. Weiterhin ist in Figur 5 (a) bis (c) ersichtlich, dass die zweiten Kammerelemente 1.312 auf der blattabgewandten Seite mittels einem Gelenk 1.32 und auf der blattzugewandten Seite mittels einer lösbaren Spannvorrichtung 1.33 miteinander verbunden sind. In Figur 5 (d) ist ersichtlich, dass die zweiten Kammerelemente 1.312 auf der blattabgewandten und der blattzugewandten Seite jeweils mittels einem Gelenk 1.32 verbunden sind. Die beiden dritten Kammerelemente 1.313 sind ebenfalls beidseitig lösbar mittels Spannvorrichtungen miteinander verbunden (nicht dargestellt). Es ist deutlich zu erkennen, dass die Verbindung der Kammerelemente 1.311, 1.312 und 1.313 untereinander unterschiedliche Formen der Kammer 1.3 ermöglicht. So zeigt Figur 5 (a) eine geschlossene Form der Kammer 1.3, bei der die beiden ersten Kammerelemente 1.311 einen geringen Abstand zueinander aufweisen. Diese Form ist günstig, wenn mit der Vorrichtung 1 der Zugang zur Rotorblattspitze, die einen Querschnitt geringer Größe aufweist, ermöglicht werden soll.

Figur 5 (b) zeigt ebenfalls eine geschlossene Form der Kammer 1.3, bei der die beiden ersten Kammerelemente 1.311 einen deutlich größeren Abstand zueinander aufweisen. Diese Form ist günstig, wenn mit der Vorrichtung 1 der Zugang zum Rotorblatt ermöglicht werden soll und das Rotorblatt einen Querschnitt größerer Größe aufweist, bspw. in der Nähe der Blattwurzel.

Figur 5 (c) zeigt eine geöffnete Form der Kammer 1.3, bei der die beiden dritten Kammerelemente 1.313 nicht miteinander verbunden sind. Diese Form ist günstig, bspw. zum Einfangen eines Rotorblatts, um die Vorrichtung 1 in Position zur Ausführung der Arbeiten an einem Rotorblatt zu bringen.

Figur 5 (d) zeigt ebenfalls eine geöffnete Form der Kammer 1.3, bei die die beiden dritten Kammerelemente 1.313 nicht miteinander verbunden sind. Im Unterschied zu Figur 5 (c) sind hier die zweiten und dritten Kammerelemente 1.312, 1.313 beidseitig mittels Gelenken verbunden.

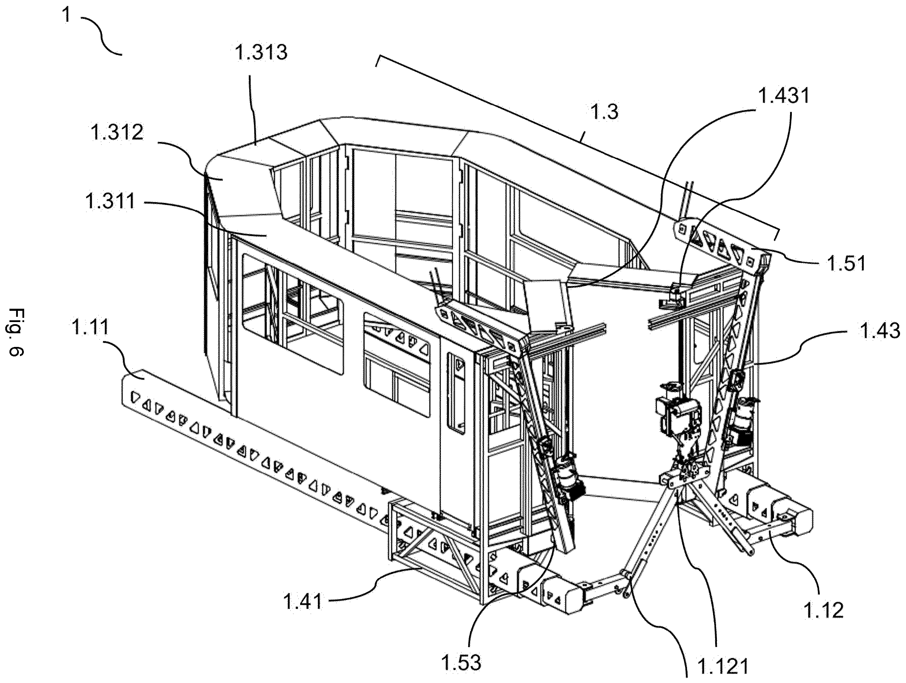

**Figur 6** zeigt eine Vorrichtung 1 im teilweise eingeklappten Zustand. Erkennbar ist, dass der Querträger 1.12 mehrfach klappbar ausgebildet ist. Dazu ist der Querträger 1.12 mehrteilig ausgebildet, wobei die Teile mittels Gelenken 1.121 miteinander verbunden sind und ein Klappen des Querträgers 1.12 um mindestens eine Achse, die parallel zur Ausdehnung der Längsträger 1.11 ausgerichtet ist, ermöglichen.

Ebenfalls ersichtlich ist, dass der Rahmen 1.43 der Stützstruktur 1.4 mehrfach klappbar ausgebildet ist. Dazu ist der Rahmen 1.43 um mindestens eine Achse, die senkrecht zur Ausdehnung der Längsträger 1.11 bzw. parallel zur Längsachse des Turms der WEA ausgerichtet ist, klappbar ausgebildet. Zweckmäßig ist der Rahmen 1.43 dazu mehrteilig ausgebildet, wobei die Teile mittels Gelenken 1.431 miteinander verbunden sind. Die klappbare Ausbildung von Querträger 1.2 und Rahmen 1.43 ermöglicht eine Reduzierung der Abmessungen der Vorrichtung 1 insbesondere für den STVO konformen Transport der Vorrichtung 1 zum Einsatzort, dem Aufstellort der WEA.

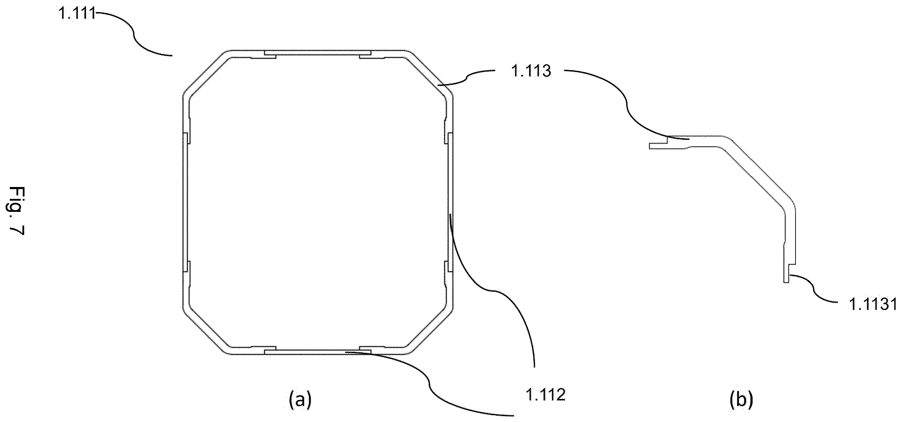

**Figur 7** zeigt einen Querschnitt eines Segments 1.111 eines Längsträgers 1.11. Der Querschnitt ist aus vier Seitenblechen 1.112 und vier Eckprofilblechen 1.113 gebildet. Die Eckprofilbleche 1.113 sind zweifach jeweils um 45° abgewinkelte Profilbleche und weisen beidseitig einen Absatz 1.1131 zur Anbindung der Seitenbleche 1.112 mittels Schweißen auf.

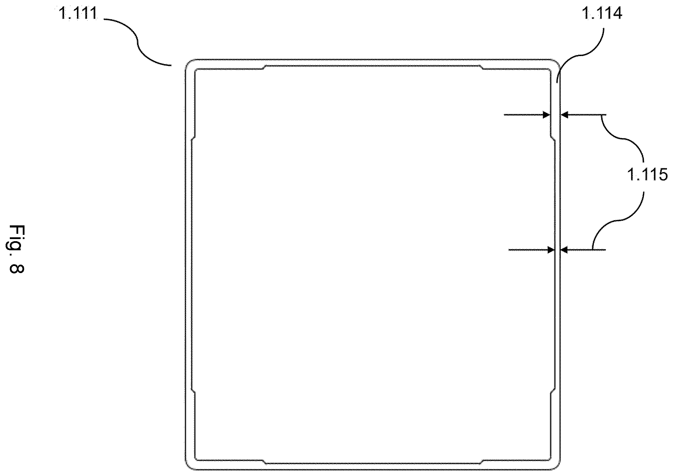

**Figur 8** zeigt einen weiteren Querschnitt eines Segments 1.111 eines Längsträgers 1.11. Der Querschnitt weist eine Wandstärke 1.115 im Bereich von 4 mm bis 5 mm und in den Eckbereichen 1.114 eine verstärkte Wandstärke 1.115 im Bereich von 6 mm bis 8 mm auf.

### Bezugszeichen

- 1: Vorrichtung zur Inspektion, Wartung und/oder Reparatur von Rotorblättern einer WEA
- 1.1: Abdruckrahmen
- 1.11: Längsträger
- 1.111: Segment des Längsträgers
- 1.112: Seitenblech
- 1.113: Eckprofilblech
- 1.1131: Absatz
- 1.114: Eckbereich
- 1.115: Wandstärke
- 1.12: Querträger
- 1.121: Gelenk
- 1.2: Fahrwerk
- 1.21: Führungseinrichtungen
- 1.211: äußere Führungseinrichtungen
- 1.212: innere Führungseinrichtungen
- 1.3: Kammer
- 1.31: Kammerelemente
- 1.311: erstes Kammerelement
- 1.312: zweites Kammerelement
- 1.313: drittes Kammerelement
- 1.32: Gelenk
- 1.33: Spannvorrichtung
- 1.34: Boden- und/oder Dachelement
- 1.35: Blech
- 1.36: Zwischenboden
- 1.37: Schubboden
- 1.4: Stützstruktur
- 1.41: erste Führungselemente
- 1.42: zweite Führungselemente
- 1.43: Rahmen
- 1.431: Gelenk
- 1.44: dritte Führungselemente
- 1.5: Aufhängungssystem
- 1.51: Aufhängungsarme
- 1.52: Aufhängungsvorrichtung
- 1.53: Gelenk zur Verbindung Aufhängungsarm mit Stützstruktur

## Patentansprüche

1. Vorrichtung zur Inspektion, Wartung und/oder Reparatur von Rotorblättern einer Windenergieanlage, wobei die Windenergieanlage mindestens einen Turm umfasst, aufweisend mindestens die folgenden Komponenten:
• einen Abdruckrahmen, aufweisend mindestens zwei aus Segmenten bestehende Längsträger und einen Querträger;
• mindestens ein Fahrwerk, aufweisend mehrere Führungseinrichtungen und angeordnet am Querträger;
• eine wettergeschützte Kammer, mindestens aufweisend mehrere mittels Gelenken miteinander verbundene Kammerelemente;
• eine Stützstruktur, welche die wettergeschützte Kammer mit den Längsträgern verbindet und mindestens erste Führungselemente zur Führung der Längsträger und zweite Führungselemente zur Führung der Kammerelemente aufweist;
• ein Aufhängungssystem, aufweisend mindestens zwei Aufhängungsarme, die mittels Gelenken mit der Stützstruktur verbunden sind und mindestens drei Aufhängungsvorrichtungen, wobei mindestens zwei Aufhängungsvorrichtungen an den Aufhängungsarmen und eine Aufhängungsvorrichtung am Querträger angeordnet sind.

2. Vorrichtung nach Anspruch 1, **dadurch gekennzeichnet, dass** die Längsträger aus jeweils mindestens zwei Segmenten bestehende Teleskopträger sind.

3. Vorrichtung nach Anspruch 1 oder 2, **dadurch gekennzeichnet, dass** die Kammerelemente mindestens zwei erste quer zur Ausdehnung der Längsträger verschiebbare Kammerelemente, und jeweils zwei zweite und dritte Kammerelemente umfassen, wobei die zweiten und dritten Kammerelemente zueinander klappbar sind.

4. Vorrichtung nach Anspruch 3, **dadurch gekennzeichnet, dass** ein erstes Kammerelement mit einem zweiten Kammerelement beidseitig mittels Gelenken verbunden ist.

5. Vorrichtung nach einem der Ansprüche 1 bis 4, **dadurch gekennzeichnet, dass** ein zweites Kammerelement mit einem dritten Kammerelement beidseitig verbunden ist, wobei das zweite und das dritte Kammerelement auf einer blattabgewandten Seite mittels mindestens einem Gelenk und auf einer blattzugewandten Seite mittels mindestens einer Verriegelungsvorrichtung lösbar oder mittels mindestens einem Gelenk verbunden sind.

6. Vorrichtung nach einem der Ansprüche 1 bis 5, **dadurch gekennzeichnet, dass** die beiden dritten Kammerelemente lösbar miteinander verbunden sind.

7. Vorrichtung nach einem der Ansprüche 1 bis 6, **dadurch gekennzeichnet, dass** die Stützstruktur weiterhin einen Rahmen zur Verbindung der beiden ersten Kammerelemente miteinander und dritte Führungselemente zur Führung der Aufhängungsarme aufweist.

8. Vorrichtung nach einem der Ansprüche 1 bis 7, **dadurch gekennzeichnet, dass** der Rahmen der Stützstruktur und der Querträger des Abdruckrahmens klappbar ausgebildet sind.

9. Vorrichtung nach Anspruch 8, **dadurch gekennzeichnet, dass** der Rahmen der Stützstruktur und der Querträger mehrfach klappbar ausgebildet sind.

10. Vorrichtung nach einem der Ansprüche 1 bis 9, **dadurch gekennzeichnet, dass** der Querträger und die Längsträger durch Gelenke miteinander verbunden sind.

11. Vorrichtung nach einem der Ansprüche 1 bis 10, **dadurch gekennzeichnet, dass** die Kammerelemente jeweils ein Bodenelement, ein Dachelement und zwei Seitenelemente aufweisen, wobei Boden-, Dach- und Seitenelemente jeweils als aus Metallprofilen gebildete Rahmen ausgebildet sind.

12. Vorrichtung nach einem der Ansprüche 1 bis 11, **dadurch gekennzeichnet, dass** die Bodenelemente der zweiten Kammerelemente eine begehbare Bodenstruktur aus quer verlaufenden, überlappenden Blechen aufweisen.

13. Verwendung einer Vorrichtung nach einem der Ansprüche 1 bis 12 zur Inspektion, Wartung und/oder Reparatur von Rotorblättern einer Windenergieanlage.
